# EUROPEAN PATENT APPLICATION

(11) **EP 0 986 258 A2**
(43) Date of publication of application: **15.03.2000**
(21) Application number: 99123957.5
(22) Date of filing: 04.08.1995
(51) Int. Cl.: H04N 7/173

(54) **An end user device for an interactive communication system**

(62) Divisional of application: 95930439.5
(71) Applicant: Tresor TV Produktions GmbH, 85774 Unterföhring (DE)
(72) Inventor: Wilhelm, Siegfried, 81373 München (DE); Roost, Holger, 85737 Ismaning (DE)
(74) Representative: Schmidt, Steffen J., Dipl.-Ing.

(57) **Abstract**

The invention provides an end user device 100 arranged for communicating data in an interactive communication system. The end user device 100 comprises control means 177 for controlling the operation of the end user device 100, transmission means 169, 185 for transmitting data to a host computer 300 of an interactive communication system, and receiving means 169, 185 for receiving data from said host computer 300 of said interactive communication system. Additionally, the end user device 100 includes at least one video input port 145 which receives data from an external video camera.

## Description

The invention relates to an end user device for home to be used with an interactive communication system via telephone lines.

Demand for interactive communication and multimedia products is rapidly increasing. A major factor in the slow growth of multimedia products is that a broadband technique infrastructure providing high volume data transfer is not in place. It will be years before a wireless network or a network of fiber optics or coaxial cables are in place, so service providers must wait for high transmission services such as "video on demand". A worldwide data communication network does exist which provides slow transmission rates. Slow transmission rate interactive communication can take place on this network and so slower multimedia services can be implemented before the infrastructure of the high volume transmission network is finished.

Analyzing the different fields of interactive television, the main on line service does not indicate that "video on demand" will be the most popular service, rather it will be programs such as " tele-games, tele-shopping, tele-learning" etc.

An interactive communication system as disclosed in the European Patent Application 95 930 439. 5 is able to fulfill such demand at a reasonable price and sufficiently flexible and expandable to allow for a wide use of the system. In order to allow end users to use such interactive communication systems, special end user devices must be available to communicate with such interactive communication systems and enable end users to profit of the advantages of such interactive communication systems in the whole extent.

It is the object of the invention to provide a respective end user device for communicating with interactive communication systems, especially with interactive communication systems as disclosed in the European Patent Application 95 930 439. 5.

There are some important factors for success in low transmission rate interactive television communication that the invention fulfills. They include: a moderate price of the end user's equipment, multiple programmable utilization of the end user's equipment, complete software services, multiple services and interesting programs can be easily obtained form service providers or host computer systems, and a large customer base is enabled to access interactive communication systems.

With the invention, two different communication links are active. First, the bi-directional transfer from an end user device to a host computer uses the public telephone network, with the host computer handling all incoming and outgoing analog/digital data. Second, the host computer is connected to a television broadcast station which transmits a television program to the end user's television set.

The end user device is able to establish communication with the host computer to take advantage of the services being provided. It is possible to coordinate bi-directional data transfer from the host computer to an end user device to a specific television program and/or service. Entering data on the end user device could have numerous effects on the host computer which in turn could effect the status of the specific television program. This could be something as simple as moving an object or as complex as altering the plot of a story. The system could also be connected to either the end user's bank account or to a billing service. For a small charge, an end user could compete against other end users in something like a trivia show, where the winner(s) receives a certain amount winning price. An end user could also purchase items during a commercials break via the end user device. These are just a few examples of the services that can be provided with this interactive communication system. Instead of a television program having a certain plot, distributing information or containing advertisement, the program transmitted by said television broadcast station can be a dedicated program containing a telephone directory, address directory, business information like exchange rates, company data, economical data, of local information on cultural or social events, environmental information, employment information, sports news, weather forecast, sales of tickets for cinemas, theaters, trains, buses. The aforementioned and many more activities are made available through the present invention on a very cost effective and easy to use basis.

These interactive communication services can be provided with relatively low data transmission rates to/from the end user's device. These data transmission rates can be further reduced by the implementation of compression software. Under these conditions, a potential market is immediately available. All of this can be accomplished with relatively low cost to both the consumer and the provider.

Further advantages, features and details will become apparent to the person skilled in the art from the following description of several embodiments of the present invention which refers to the enclosed drawings, in which:
Fig. 1 is a block diagram of an interactive communication systems used with an end user device according to the invention;
Fig. 2 is an embodiment of an end user device according to the invention;
Fig. 3 is an illustration of a telephone device for an end user device according to the invention;
Fig. 4 and 5 are block diagrams of the embodiment of the end user device according to the invention;
Fig. 6 is a second embodiment of an end user device according to the invention; and
Fig. 7 is a block diagram of the connection between a host computer of an interactive communication system and end user devices according to the invention;

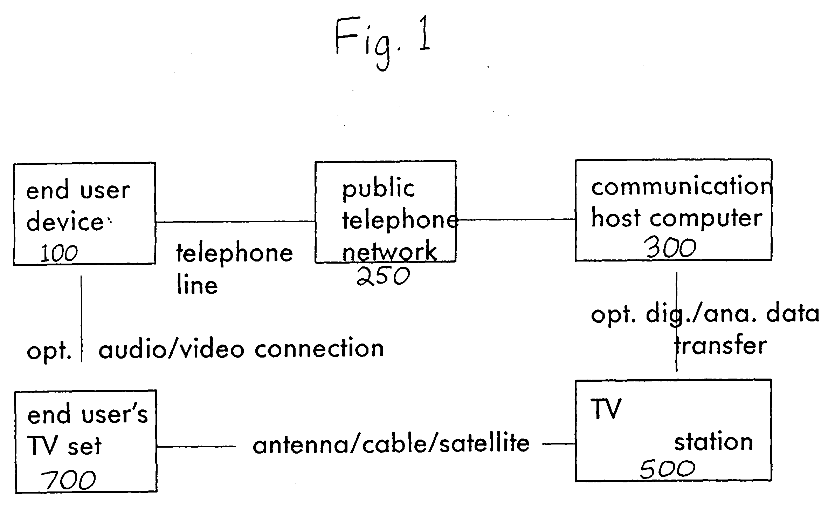

The present invention illustrated in Fig. 1 comprises at least one end user device (100) arranged for communicating data with a host computer (300), a communication means (250) between said host computer (300) and said at least one end user device (100), a television broadcast station transmitting (500) a television program at least partially controlled by said host computer (300) and at least one television set (700) arranged for receiving said television program transmitted by said television broadcast station (500). Data received by the host computer (300) from the end user device (100) is taken into account by a software program in said host computer (300) controlling output action from said host computer (300).

Two communication situations are possible between the host computer (300) and an end user device (100). It is possible for the end user device (100) to only be able to transmit data to the host computer (300). And it is possible that end user device (100) has both data transmitting means and means for receiving text, graphics, video and audio data or programs from the host computer (300).

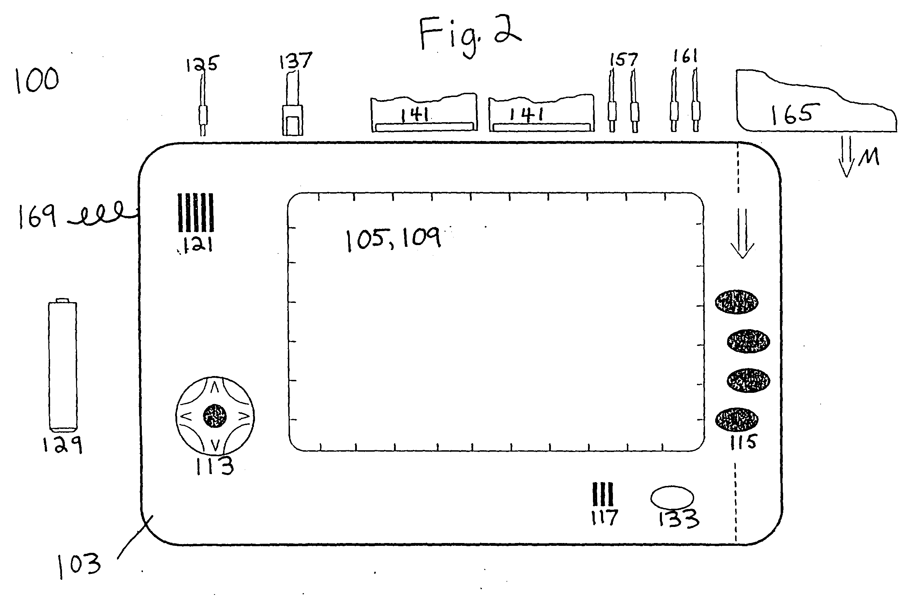

A preferred embodiment of the invention has an end user device (100) with bi-directional communication means (200). Referring to Fig. 2, the end user device (100) has a user interface including data output means to output text, graphics, video and audio data to an end user. The components of the end user device (100) are located in a housing (103). The end user device housing (103) contains a transparent tablet (105) for data entry means. The transparent tablet (105) is an x-y-tablet with a tactile sensitive pad. All data received by the transparent tablet (105) is entered by the end user's finger tips or with an appropriate pen. The area of the transparent tablet (105) is divided by coded rows and columns, as well as x-y-area for point coordinates. The transparent tablet (105) can therefore be used as a push-button field and/or as a mouse pad. The x-y-tablet can be an optical or resistor type device with low accuracy and resolution. Below the transparent tablet (105) is a graphics display (109), preferably, but not necessarily, covering the entire surface area of the transparent tablet (105). The graphics display (109) is an alpha-numeric/graphic LCD display or a plasma display. This is the normal data display means for any internal or received information. The graphics display (109) should be as large as possible.

A secondary data entry means is the cross switch (113). This cross switch (113) is mounted in the housing (103) separately from the transparent tablet (105). The cross switch (113) can be equipped to supply directional and/or x-y-coordinates data. The cross switch (113) may consist of a joystick, a tractor ball, a touch sensitive pad etc. The end user device (100) is also equipped with a plurality of function buttons (115). These buttons may be used for data functions such as graphics display (109) manipulation, "function select", "telephone <> modem", "enter", "send", etc. Volume may be controlled with the function buttons (115) or it may be controlled by a knob on the side of the housing (103) (not shown). All functions may also be controlled and/or programmed by software.

Audio data can be recorded directly by the end user device (100) by means of a microphone (117) built into the housing (103). The end user device (100) can reproduce audio data by means of a speaker (121). The end user device (100) may be powered by means of an external power port (125) or a battery (129). A power switch (133) controls the powered state of the end user device (100).

The end user device (100) is connected to the public telephone communication network (250) at a telephone line port (137). The public telephone communication network (250) may be a analog or digital (e.g. ISDN) network. The telephone line is the only means of data transfer between the end user device (100) and the host computer (300).

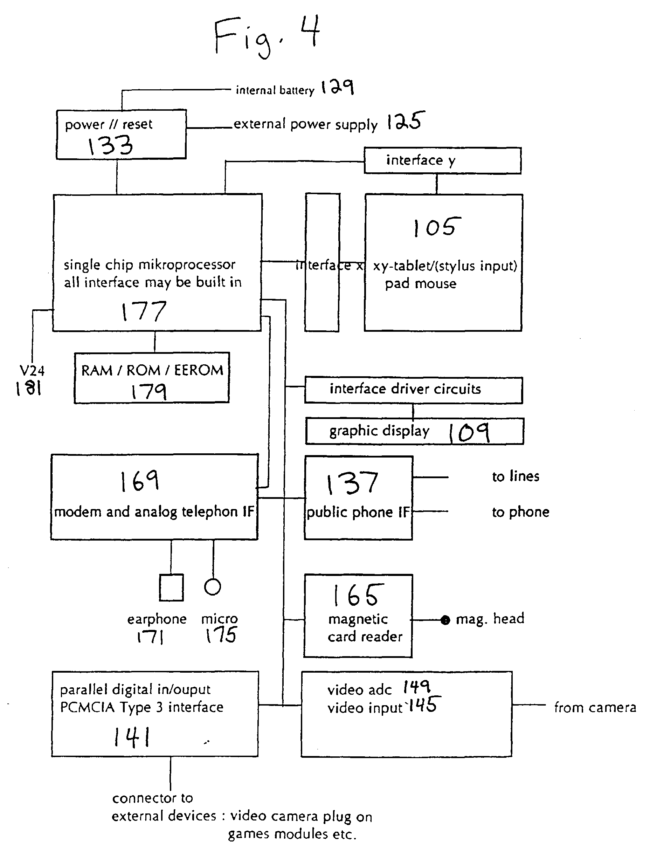

At least one or more input ports (141) are adapted to send and receive data to and from a peripheral device other than the host computer (300). It is possible for this input port (141) to be connected to the end user's television set (700) to receive television status information. The input port (141) could also be connected to numerous other external devices such as a video camera, game modules, etc. The end user device (100) is also equipped with a dedicated video input port (see Fig. 4, 145). Connected to the video input port (145) is a video analog-to-digital converter (see Fig 4, 149). The video input port (145) and the video analog-to-digital converter (149) is designed to transmit video data directly to the host computer (300) through an external source or a snap on module which carries a charge coupled device. There is the possibility to put the entire control hard/software of the external devices into such external devices with a minimum driver capability residing in the end user device (100). This has the advantage of a relatively simple and cost effective design of the end user device (100) giving the broadest flexibility for the design and functionality of the external devices. The other possibility is the control of the external devices by hardware and/or software entirely residing in the end user device (100). This concept allows for a simple and cost effective design of the external devices.

Additional outputs for audio and video data are the audio output port (157) and the video output port (161). These output ports may be used to replace the sound output of the internal speaker (121) and the video output of the graphics display (109) or they may be used for a secondary output differing from that of the graphics display (109) and the internal speaker (121). A TV modulator can be installed making the end user device (100) able to display graphics on a monitor (for video games or still pictures etc.) through the video output port (161).

The end user device also comprises an identification means (165). This may be either a magnetic strip card reader or a microchip card reader. It is preferably located on a face of the housing (103) perpendicular to the transparent tablet (105). The magnetic strip card or the microchip card is swiped through the identification means in the direction of the arrow M. After the code specific to the magnetic strip card or microchip is read, the predefined unique identification of the end user is established. Subsequently, this information is later transmitted to the host computer (300). It is also possible that the identification means (165) consists of a microchip housed internally in the end user device (100). Then the predefined unique identification number would indicate a specific end user device (100) rather than a specific end user. A further step of the user entering in a PIN code could be implemented to increase security. This unique identification of the user is processed in the host computer (300) to allow the user access to the software in the host computer (300), to allow the user to cause actions in the host computer (300), to charge the user's account, etc.

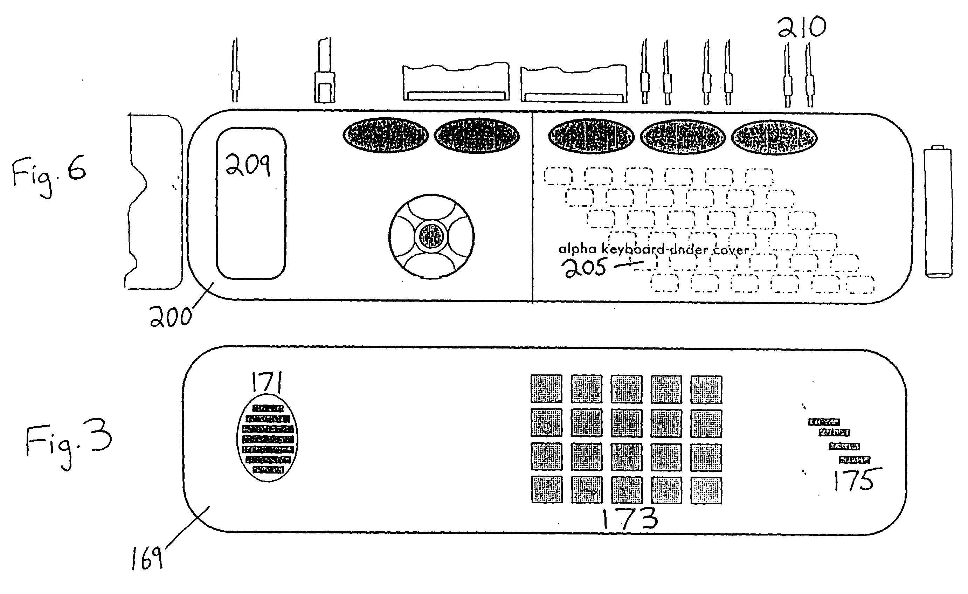

Figure 3 shows an analog telephone (169) which is attached to the end user device (100). The analog telephone (169) comprises an earphone (171) for receiving audio information, a telephone keyboard (173) for numerically entering telephone numbers and other information, and a microphone (175) for transmitting audio information. A disconnect button (not shown) can be placed on the phone or on a cradle to hold the phone in its inoperative state. This analog telephone operates independently of the other portions of the end user device (100), but can not be simultaneously used when a connec-tion between the end user device (100) and the host computer (300) exists. The telephone (169) has the standard functions of a state of the art telephone. In an advanced embodiment, the analog telephone may also be a digital telephone (e.g. ISDN) connectable to a digital telephone network.

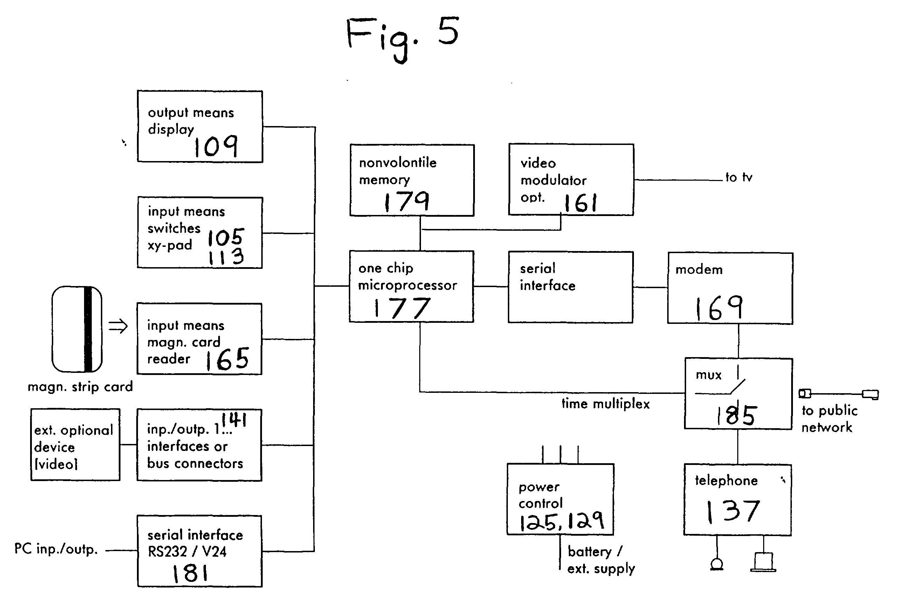

Figures 4 and 5 show block diagrams of the end user device (100). Features previously mentioned have retained their reference numbers. The end user device (100) is controlled by one or more single chip microprocessors (177). End user device (100) applications can be either stored in read only memory or is software downloaded from the host computer. Another possibility is the use of a FLASH-memory which is fed by the host computer with the respective software program to control the operation of the end user device (100). Data entered on the end user device (100) and data received from a peripheral can be stored in RAM memory housed in the memory space (179). The memory space (179) also contains read only memory which contains the operating system software. The operating system software comprises a kernel monitor which initializes the peripherals and tests all of the hardware and software for communication with the host computer.

The software also serves the following functions: power on restart function, it contains built in drivers for all hardware parts (i.e. tablet, display, ADC, digital I/O, modem, analog phone, magnetic card reader), test routines for the hardware and contains a standard modem package. The test routines for the hardware includes testing of the MPU, RAM, EEPROM, display, tablet, video, card reader, analog phone etc.

The software has different modes including: power on restart, parameter set up, telephone mode, alpha / x-y-data transfer mode, video data transfer mode, remote control mode, down load mode, up load mode, load play mode, and set/reset play mode. The software is capable of real time mode switching at: alphanumeric input / output, dialing, answering, x-y-data transfer mode with external mode switching, analog telephone mode with external mode switching, external video transmission, and parallel digital I/O interface for optional plug on devices. The read only memory may also contain a software program for compressing and decompressing data for more efficient data transfer.

A standard V24/RS232C serial in/out interface (181) connects the microprocessor (177) to the host computer via a modem (169) internally or externally located. The modem (169) may provide the full range of functions of a normal Hayes modem. Alternatively, the functionality may also be restricted or expanded vis-à-vis a Hayes modem. A multiplexer (185) toggles the end user device (100) between a telephone mode and a mode for communicating with the host computer (300). The multiplexer (185) can be switched manually or it can be done by remote control from the host computer (300). The end user device (100) will function as a telephone (169) when not in communication with the host computer (300) and so the multiplexer (185) will connect the telephone (169) to the public telephone network (250). Depending on the technology the telephone network employs, other solutions than the multiplexer may be necessary to realize this function.

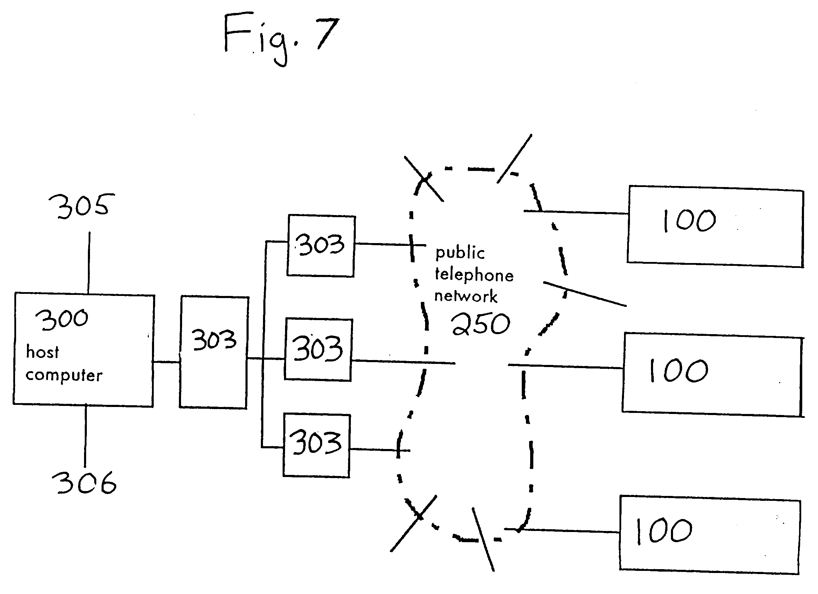

A second embodiment of the end user device (200) is pictured in Figure 6. This has the same internal features and external features as the end user device housing (103) except that it has an alpha numeric keyboard (205) in place of the transparent tablet (105), the graphics display (209) is located away from the keyboard (205), and there is a second video output (210). The graphics display (209) may also be replaced with the graphics being displayed upon a television screen with the second video output (210). It is possible that the graphics displayed on the television screen are partially translucent and can be seen simultaneously with normal television broadcasts. Having the graphics displayed upon a television screen rather than a built in display can allow for a smaller, less expensive overall package of the end user device (200). Instead of the tactile input means (push buttons, x-y-tablet etc., a natural voice input recognition may be employed. this would allow for a much easier control of the end user device (100) and would also simplify the physical input means.

The host computer (300) is connected to the end user devices (100) by means of the public telephone network (250) with bidirectional communication between the two devices. This public telephone network (250) may be a wireless cellular network or a standard fixed wire telephone network. Figure 7 shows an intermediary between the public telephone network (250) and the host computer (300), the data communication handling equipment (303). The communication handling equipment (303) routes and handles all incoming and outgoing calls and data transfer. The total number of simultaneous end user's and thus telephone links could be on the order of at least 10,000 or more units with each end user device (100) receiving a distinct transmission, so the handling equipment needs to be exact and expedient.

The end user device (100) by means of its modem, "calls" via the public telephone network (250) and the communication handling equipment (303), a modem housed in and connected to the host computer (300). Through normal Hayes modem protocol, communication is established between the host computer (300) and the end user device (100). The preferred baud rate is at least 2400 bits/sec but may also be more depending on the quality of the network. Since the telephone network is not always free of noise and disturbance, error correction methods are required. Error correction is timely and so the slow transmission rate has been established. The data is transmitted by XMODEM, YMODEM, ZMODEM, and MNP5-Protocol of the like with a fast cyclic redundancy check algorithm and with error correction. The high level protocol calls for data framing with variable block length. This is done by sending a data frame with a begin code, an address, the identification code of the user, and an end code. Text, graphics, video and audio data can all be sent to the end user devices (100).

The host computer (300) has bi-directional connections to a television studio computer (306) and an external network (305). The studio computer (306) controls the television broadcast. Any changes in a television program are done by the studio computer (306) and can be prompted by an action from the host computer (300).

The connection to the external network (305) allows the computer to access such things as a user's bank account, an outside billing agency, or any other outside agency or computer for that matter. Assuming that an end user is on an end user device (100) which is receiving data corresponding to a broadcast from the interactive communication system's television station (500) on a specific television channel and watching said broadcast on the end user's television set (700), and during a commercial break the end user sees an item he or she would like to purchase, then he or she would simply indicate that on the end user device (100). The host computer (300) would then connect to the bank account corresponding to the identification number of the active end user and check if there is sufficient money to make the desired purchase. If there is sufficient money in the bank account, the specified amount of money is withdrawn and is electronically transferred to the vendor selling the desired product's bank account. Along with the money transfer, the personal information (address, phone number) from the end user's account can be sent to the vendor. The bank account could also be accessed as a means of billing for services rendered by the host computer (300). Since the access of bank accounts is a sensitive matter, a PIN code in addition to the code from the identification means may be required to further ensure the identity of the end user. Instead of accessing the end user's bank account, his /her credit card or his virtual money account or card ("Cyber bucks") could be debited.

Another feature of the host computer (300) is that it can configure the network of end user devices (100) into several modes: a single user controlling a television program, multiplexed users controlling a television program, multiple users to the host computer (300) and/or multiple users etc. So the host computer (300) by means of a software program, may at least partially control a television broadcast as the result of the data output of at least one or more end users. As a result, interactive television programs catering to a plurality of end users is desirable. Since the host computer (300) can receive data simultaneously from a plurality of end user devices (100), large scale interactive competitive and cooperative programs can be implemented.

End users could compete against one another in such a program as a trivia game. Each contestant can be knowingly charged a certain amount of money to participate in the contest with the winner receiving a large amount of money automatically credited to his or her account. The trivia game software for the end user device (100) can be downloaded to the end user device (100) upon the optional successful transfer of money from the end user's connected bank account. The television broadcast will display on the end user's television set (700) trivia questions in the form of multiple choice answers. Activation areas corresponding to the selection of a certain answer appear on the graphics display (109) of the end user device (100). The individual who replies the quickest and with the correct answer on his or her end user device (100) gets the most points. This process repeats for a while with some variations and at the end, the end user with the most points wins the cash prize credited to his or her bank account.

Another program could be an interactive dating service. An end user indicates that he or she would like to participate in the dating program, so his or her account is charged and the dating program software is then downloaded to his or her end user device (100). Individual end users enter their vital statistics on the end user device (100) which are then transmitted to the host computer (300) which sends them to the television broadcast station (500) via the studio computer (306) where they are transmitted to the end user's television sets (700). An end user interested in a second end user could send a message to the second end user by means of the host computer (300). Direct end user to end user communication by means of the host computer (300) can be made when both parties agree to communicate.

The host computer (300) will also have a portion of hard disk memory for each end user to access and store information. This could be used for billing records or it could be used to store accumulated electronic mail etc.

A normal activation of the interactive communication system would begin with the kernel monitor's initialization of the end user device (100) after being supplied with power. This involves the end user establishing his or her identification (i.e. by swiping a magnetic card or a microchip card through the identification means (165). Unless told otherwise the end user device (100) will attempt to establish communication with the host computer (300). Upon establishment of communication, the host computer (300) will download a software program (which may be specific to the end user's identification code) to the end user device (100) where it is stored in the end user device's read/write memory (179). This may be a menu giving the end user options, or it may be a software program corresponding to the present television broadcast. Any data entered in the end user device (100) is processed by the end user device (100). It is possible that the software program downloaded to the end user device (100), or any software program for that matter, does not require further communication with the host computer (300), so the connection between the end user device (100) and the host computer (300) can be terminated without losing the full functionality of the software program. More likely, the initial software program is a menu listing other software programs that are available to be downloaded to the end user device (100). This menu could be specific to the end user currently using the end user device (100). The end user may then select a new software program to be downloaded to the end user device (100) where it is intended for the end user device (100) to behave like a terminal with the host computer (300) in remote control. The new software program is also stored in the read/write memory of the end user device (100) either stored in free memory or at least partially overwriting other software programs stored in the read/ write memory. A software program downloaded for a trivia game, may have five software buttons on the graphics display (109) coordinating to the answers given on the screen. All the end user must do is press the transparent tablet (105) to the location where the buttons are located. Another software program may have arrows instead of buttons, text, graphics, etc. Data sent to the host computer (300) from the end user device (100) is processed by the host computer (300) which has a software program to determine if the data sent from the end user device (100) will at least partially control the television broadcast (by means of sending data to the studio computer (306)). Any required billing is done automatically since the end user's identity has been established by the identification means (165). Quitting may be done at any time and results in disconnecting the link between the end user device (100) and the host computer (300).

The end user device (100) is not limited to use with an interactive communication system as disclosed in the European Patent Application Nr. 95 930 439.5. The end user device (100) may be programmed to work independently of a host computer or may be programmed to work with a different system. The host computer (300) may be programmed to data input means other than said end user device (100).

## Claims

1. An end user device (100) arranged for communicating data in an interactive communication system, said end user device (100) comprising:
- control means (177) for controlling the operation of the end user device (100),
- transmission means (169, 185) for transmitting data to a host computer (300) of an interactive communication system, and
- receiving means (169, 185) for receiving data from said host computer (300) of said interactive communication system,
characterized by
- at least one video input port (145) which receives data from an external video camera.

2. The end user device (100) of claim 1,
characterized in that
said end user device (100) has at least one video analog to digital converter (149) coupled to said at least video input port (145).

3. The end user device (100) of claim 1 or 2,
characterized in that
said end user device (100) is provided with at least one input port (141) adapted to send and receive data to and from a peripheral device (141) other than said host computer (300).

4. The end user device (100) of claim 3,
characterized in that
said at least one input port (141) of the end user device is adapted to be connected with an end user's television set (700) to receive television status information.

5. The end user device (100) of one of the preceding claims,
characterized in that
said end user device (100) comprises at least one video output (161) and at least one audio output (157) for image and/or sound transmissions from said host computer (300).

6. The end user device (100) of claim 6,
wherein said video output (161) is connected to the video input of said end user's television set (700) to display data received by said end user device (100).

7. The end user device (100) of one of the preceding claims,
characterized in that
said end user device (100) has a user interface (103) including data output means to output text, graphics, video and audio data.

8. The end user device (100) of one of the preceding claims,
characterized in that
said user interface (103) comprises a data entry means for entering alphanumeric, graphical, x-y-coordinates and/or directional data (105, 113, 115).

9. The end user device (100) of one of the preceding claims,
characterized in that
said end user device has read/write memory space (179) to store data entered manually and/or received from a peripheral input (141).

10. The end user device (100) of one of the preceding claims,
characterized in that
said end user device (100) has read/write memory space (179) to store data and/or at least one software program received from said host computer (300).

11. The end user device (100) of one of the preceding claims,
characterized in that
said end user device (100) has read only memory (179) comprising an operating system including means to at least complete hardware and software tests, and initialize the end user device (100) for communication with said host computer (300).

12. The end user device (100) of one of the preceding claims,
characterized in that
said read only memory (179) further comprises a data compression/uncompression program for sending and receiving data from said host computer (300) and/or a peripheral device (141).

13. The end user device (100) of one of the preceding claims,
characterized in that
said end user device (100) has an identification means (165) which transmits a unique identification code of a predefined end user to the host computer (300).

14. The end user device (100) of one of the preceding claims,
characterized in that
said identification means (165) comprises a magnetic strip card reader or a chip card reader.

15. The end user device (100) of one of the preceding claims,
characterized in that
said identification means (165) is a read only memory containing a unique identification code where the read only memory is housed in the end user device.

16. The end user device (100) of one of the preceding claims,
characterized in that
said transmission and receiving means (169, 185) are adapted to communicate data in said interactive communication system in a bi-directional manner.
